# EUROPEAN PATENT SPECIFICATION

(11) **EP 4 136 390 B1**
(45) Date of publication and mention of the grant of the patent: **08.10.2025**
(21) Application number: 21717961.3
(22) Date of filing: 14.03.2021
(51) Int. Cl.: F24F 13/02, F16L 41/08, F16L 25/12, F16L 25/00, F16L 23/14, F16L 21/00, F16L 5/02, F16L 37/00, F16L 23/04, F16L 37/12, F16L 41/03

(54) **CONNECTOR FOR AIR CONDUITS AND RELATIVE AIR PIPELINE**
VERBINDER FÜR LUFTLEITUNGEN UND ZUGEHÖRIGE LUFTLEITUNG
RACCORD POUR CONDUITS D'AIR ET CONDUITE D'AIR RELATIVE

(30) Priority: 18.03.2020 IT 202000005722
(43) Date of publication of application: 22.02.2023
(73) Proprietor: Zeffiro S.r.l., 50031 Barberino di Mugello (FI) (IT)
(72) Inventor: GUASTI, Gino, 50031 Barberino di Mugello (IT)
(86) International application number: PCT/IB2021/052107
(87) International publication number: WO 2021/186312

(56) References cited:
- EP-A2- 1 225 383
- AU-A- 1 415 076
- CH-A5- 679 514
- DE-A1- 2 435 252
- DE-A1- 2 553 720
- FR-A1- 2 335 779
- US-A- 3 443 601

## Description

### TECHNICAL FIELD

The present invention relates to the sector of air conduits. In particular, it concerns the sector of air conduits for commercial or residential construction.

### BACKGROUND ART

In the state of the art solutions for connecting sections of air conduits by means of flanges are known.

Said air conduits can have metal walls or alternatively walls made of polyurethane, glass or rock/wool panels.

Said flanges can be an integral part of the conduit itself, or elements connected to the ends of said conduit sections.

The flanges integral with the conduit are obtained by bending the extreme edges of the conduit so as to form said connection flanges, adapted to be connected to further flanges.

In the case of connected elements, the flange consists of a profile with an L-shaped section that fits with an end of air conduit piece to realize said flange.

Said flanges have the drawback of not guaranteeing the required sealing standards of the pipeline, especially at the edges of the polygonal section conduits.

Said flanges involve long assembly times of the conduits, since each flange must firstly be connected to the conduit and then sealed with silicone or similar insulating substances to ensure the desired sealing standard.

In the state of the art there are no connection systems for air conduits capable of satisfying high sealing classes, for example higher than class B of the UNI EN 12237: 2004 standard or of the UNI EN 1507: 2008 standard, and which are both simple and easy to assemble.

The metal conduits, without flanges and with polygonal section, have the drawback that the sides of the conduit, near to the inlet and outlet, are never perfectly flat, but slightly convex due to the closing and shaping processes of the conduits. This convexity of the conduit affects the adherence of the gaskets, causing air leaks at the joints.

It is also known the solution of document EP1225383, comprising two flanges that can be inserted in respective adjacent conduits and a third coupling element for coupling said flanges to each other. This solution allows the connection of two conduits to each other without however solving the problem of leaks between the flange and the conduit.

Only by applying sealants between the conduits and the joints or by seaming the ends of the conduits in a very complex way the air leaks from ends of the conduit can be reduced.

### SUMMARY

The aforementioned drawbacks of the prior art are now solved by a junction system for air conduits comprising: an anchoring portion of a first air conduit which can be inserted through a first insert portion of the first air conduit into at least one second air conduit; at least one block element connectible to said anchoring portion; wherein the block element comprises at least a flexible portion configured to apply a thrust on an outer surface of one of the air conduits when said block element is connected to said anchoring portion. Alternatively, the aforementioned drawbacks of the prior art are solved by a junction system for air conduits comprising: an anchoring portion of a tubular element that can be inserted through at least one insert portion of the tubular element into at least one air conduit; at least one block element connectible to said anchoring portion; wherein the block element comprises at least a flexible portion configured to apply a thrust on an external surface of one of the air conduits when said block element is connected to said anchoring portion. This solution allows a simple and quick coupling of several conduits together and allows excellent results in terms of sealing thanks to the thrust exerted by the flexible portion of the block element on the walls of the conduit. Said insert portion guarantees the axial alignment of several conduits with each other, in particular during the assembly phase, when the conduits are not yet fixed to each other.

In the following, the term "conduit" refers to the single pipe element having a circular, polygonal or oval section; in the case of conduits connected by means of a tubular element, the conduit can be a conduit with spiral or longitudinal seaming. As better clarified in the following, the term "junction system" means the group of elements suitable for making a sealed connection between a conduit and a wall or between two or more conduits together. As better clarified below, the term "pipeline" means the group of elements capable of allowing the transport of air from one point to another, generally comprising several conduits and multiple junction systems connected to each other.

Advantageously, the block element can comprise a coupling portion configured to interlock with the anchoring portion of the first conduit or of the tubular element. Preferably, said interlocking coupling is of the reversible type. This type of coupling allows the junction to be released and therefore the previously joined conduits to be disconnected for maintenance.

In one case, the anchoring portion can be a portion of said tubular element shaped to form a part of said interlocking coupling. In this case the conduits are of the classic type and the connection is provide only by to the tubular element and to the block element. In another case, the anchoring portion is an end portion of the first air conduit suitably shaped to at least partially realize said interlocking coupling. In this case, a block element is sufficient to tightly and securely block the conduit of the pipeline.

The anchoring portion can consist of a end portion of the first conduit and a end portion of the second air conduit, which cooperate together for realizing the anchoring portion to which the block element is connected. This solution allows to minimize the elements that allow the sealed junction of the conduits.

Advantageously, the flexible portion of the block element comprises an edge, preferably a distal edge, of contact of the block element with said air conduit. This contact edge allows to transmit the elastic thrust of the flexible element on the external surface of the conduit. Even more advantageously, said block element is made at least in part of polymeric material, preferably made of an elastomeric material, to provide an optimal elastic thrust.

Advantageously, said first insert portion can comprise at least a first gasket to ensure said air tightness. The first gasket ensures air tightness between the conduit and the junction system.

In the case of the presence of the tubular element, this can comprise a second insert portion configured to fit into said first air conduit. This second insert portion may include at least a second gasket to ensure airtightness between the second insert portion of the tubular element and the conduit.

Advantageously, the external shape of the insert portion can be substantially complementary with the inner shape of the corresponding air conduit. This shape makes it possible to minimize the space between the tubular element or first air conduit and the second air conduit. In this way, smaller seals can be used and the decrease of the section of the pipeline at the joining system does not affect the overall flow rate of the pipeline.

In particular, the tubular element and/or said first air conduit can have a polygonal, circular or oval shaped section. This allows a wide and widespread use in the aeration systems available on the market.

Advantageously, said tubular element can comprise corner components and straight components configured to interlock with each other to form said tubular element. Said straight components comprise respective anchoring portions with corresponding block elements. This solution allows to obtain tubular elements that are easy to manufacture and simple to assemble.

In particular, the corner component or the block element may include at least one harpoon configured to prevent the extraction of the at least one air conduit from the junction system. This solution prevents the conduit from slipping out of the junction system.

A second purpose of the present invention is an air pipeline comprising a plurality of air conduits connected to each other by means of one or more junction systems in accordance with the present invention. The pipeline thus conceived allows the transport of large quantities of air from one place to another, minimizing leakages on a long-term basis.

Advantageously, said conduit can have one or more block elements, wherein each block element is colored externally to allow an immediate distinction of the type of air transported by the conduit. The block element can be colored according to the intended use or purpose of use of the pipeline, according to one of the following options:
- red if the air pipeline is a delivery pipeline;
- blue if the air pipeline is a return pipeline;
- green if the air pipeline is a pipeline for the intake of air from the outside;
- gray if the air pipeline is a pipeline for expelling air outside.

Further colors of the block element may be possible, depending on the regulations currently in force. The effect is to identify at first sight what type of pipeline it is.

Further drawbacks are solved thanks to the details and technical characteristics of the present invention as provided by the dependent claims.

These and other advantages will emerge in more detail from the description, made below, of an example of embodiment given by way of non-limiting example with reference to the attached drawings.

### DESCRIPTION OF DRAWINGS

In the drawings:
Fig. 1 shows a schematic view of a first type of circular section air pipeline equipped with a junction system according to the present invention;
Fig. 2A shows a schematic sectional view of a first embodiment of the junction system for air conduits;
Fig. 2B shows a schematic sectional view of a second embodiment of the jucntion system for air conduits;
Fig. 3 shows a schematic view of a second type of polygonal section air pipeline equipped with a junction system according to the present invention;
Fig. 4 shows a schematic sectional view of a third embodiment of the junction system for air conduits;
Fig.5 shows a schematic detail view of the corner of the junction system of Fig. 2B;
Fig. 6 shows a schematic sectional view of a fourth embodiment of the junction system for air conduits;
Fig. 7 shows a schematic sectional view of a fifth embodiment of the junction system for air conduits;
Fig. 8 shows a schematic view of a type of circular section air pipeline equipped with a junction system in accordance with the embodiment of Fig. 7;
Fig. 9 shows a schematic view of a type of rectangular section air pipeline connected to a wall;
Fig. 10 shows a schematic sectional view of a sixth embodiment of the junction system for an air pipeline of the type shown in Fig. 9;
Fig. 11 shows a schematic view of a type of multiple air pipeline in which four rectangular section conduits are connected to each other;
Fig. 12 shows a schematic sectional view of a seventh embodiment of the junction system for an air pipeline of the type shown in Fig. 11;
Fig. 13 shows the elements of an assemblable version of the tubular element;
Fig. 14 shows a sectional view of two versions of said assemblable tubular element;
Fig. 15 shows the elements of a further assemblable version of the tubular element;
Fig. 16 shows a sectional view of said further assemblable version of the tubular element;
Fig. 17 shows a schematic front view of a tubular element according to the present invention.

### DETAILED DESCRIPTION

The following description of one or more embodiments of the invention refers to the attached drawings. The same numerical references in the drawings identify the same or similar elements. The object of the invention is defined by the attached claims. The technical details, structures or characteristics of the solutions described below can be combined with each other in any way.

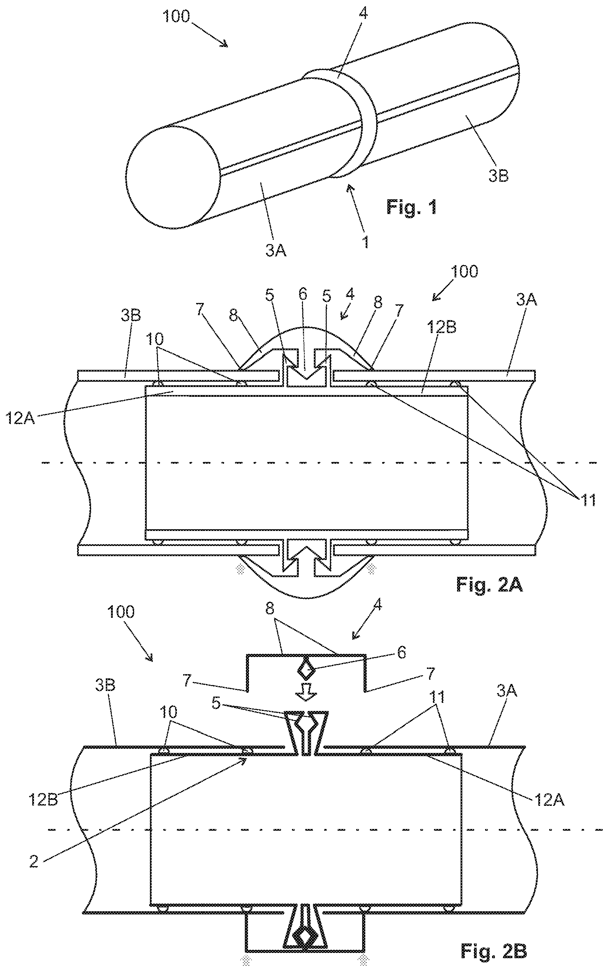

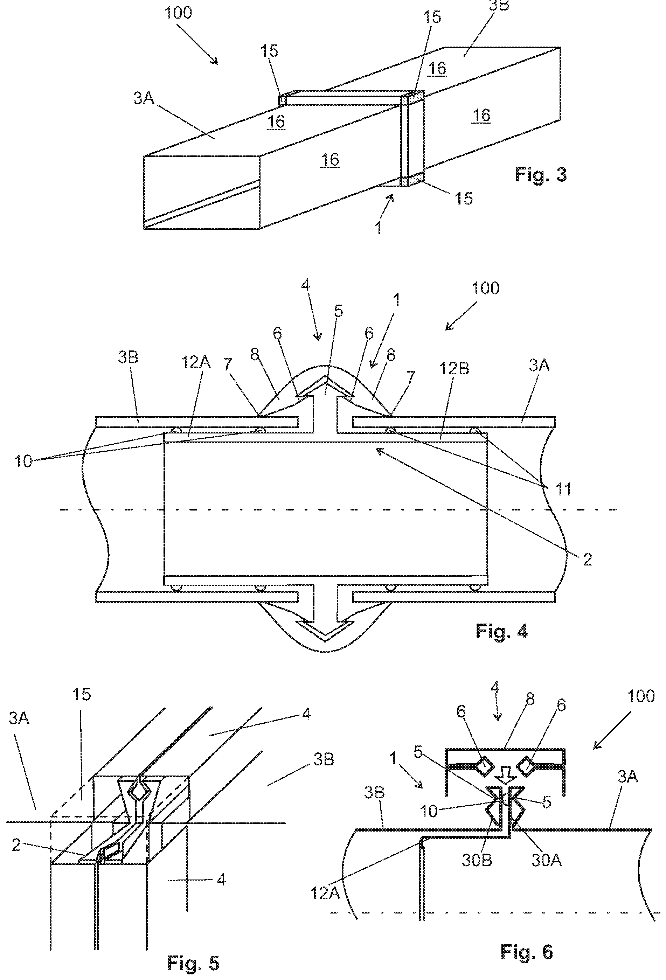

With reference to Figs. 1 and 3, an air pipeline equipped with a junction system 1 for air conduits 3A, 3B according to a first embodiment of the present invention is shown. The junction system 1 includes a tubular element 2, that is not visible in Fig. 1 and 3 because it is inserted within the two air conduits 3A, 3B. The junction system 1 further comprises a block element 4 shown in Fig. 1 and 3.

As clarified by Figs. 2A, 2B and 4, each block element 4 interlocks with the tubular element 2. In particular, with reference to Fig. 2A and 2B, the coupling portion 6 of the block element 4 bayonet fits into a complementary housing made by the anchoring portion 5 of the tubular element 2. In this case, the coupling portion 6 of the block element 4 is inserted into the anchoring portion 5 of the tubular element 2 making a male-female coupling. A stop between the anchoring portion 5 and the coupling portion 6 prevents the detachment of the block element 4 from the tubular element 2. In an inverse manner, in the embodiment of Fig. 3 and 4, the anchoring portion 5 of the tubular element 2 is inserted in the coupling portion 6 of the block element 4 realizing a male-female coupling. The bayonet joint between the anchoring portion 5 and the coupling portion 6 is achieved by means of two surfaces in contrast with each other to prevent mutual movements in the radial direction. This type of joint has the advantage of being easily realizable and, at the same time, reversible if, for example, the conduit 100 requires inspection or maintenance activities inside it.

The anchoring portion 5 of the tubular element 2 of Fig. 2B is obtained by bending the metal sheet of the sides of the tubular element 2, as shown in Fig. 5, in this way the tubular element 2 can be made at low cost and using a sheet similar or equal to that of the conduit 3A, 3B. Similarly, the block element 4 is obtained by bending a metal sheet so that the profile of its section is substantially complementary to the profile of the section of the corresponding anchoring portion 5. As illustrated in Fig. 3, the block elements 4 are four, i.e. one for each side of the conduit 3A, 3B, and are joined together by four angular elements 15 that allow to improve the overall appearance of the pipeline 100 as well as to further reduce the air pipeline 100 leakages.

The block element 4 of the embodiment of Fig. 2A and 4 is made of polymeric material, preferably elastomeric. In this way, the block element 4 is more easily connectable to the anchoring portion 5 of the tubular element 2. Furthermore, as shown in Fig. 3, a single block element 4 is sufficient for closing all around the connection between the two conduits 3A and 3B. As shown in Fig. 2A, the tubular element 2 can also be made of polymeric material and have various sizes. In this case, the tubular element is made with a single piece.

The block element 4 comprises a flexible portion capable of exerting, thanks to its elasticity, a thrust on the air conduits 3A, 3B. With reference to Fig. 2A and 4, the block element 4 comprises a pair of fins 8, which constitute the flexible portions 8 of the block element 4, configured to flex when the block element 4 is connected to the element tubular 2. The distal end of the fins 8 comprises a planar contact edge 7. The bending of these fins 8 generates a force having a direction normal to the surface of the air conduits 3A, 3B and oriented towards the inside of the conduit 3A, 3B. The fins 8 have a length greater than the distance between the abutment area of the anchoring portion 5 with the coupling portion 6 and the external surface of the conduit 3A, 3B. Since the fins 8 are long, the operator that tries to connect the block element 4 to the tubular element 2, for assembling said pipeline 100, must exert a force on the external surface of the block element 4 until the two elements interlock . Once the block element 4 is connected to the tubular element 2, the elasticity of the fins 8, due to the polymeric material of which they are made, allows to generate a preload force which from the contact edge 7 is discharged onto the side 16 of the conduit 3A, 3B. This thrust allows to obtain the double advantage of making the internal side of the sidewall 16 of the conduit 3A, 3B adhering completely to the first gasket 10, significantly improving the seal of the pipeline 100, and making the sidewall 16 of the conduit 3A, 3B appearing planar and not convex as normally happens in traditional conduits.

In a completely analogous way, the embodiment shown in Fig. 2B comprises a block element 4 made by bending a metal sheet. The section profile of the block element 4 represented in Fig. 2B, has ends having an "L" shape. These L-shaped ends are equivalent to the fins 8 of the embodiments Fig. 2A and 4 and are shaped in such a way as to exert an orthogonal thrust to the flank of the conduit 3A, 3B through the contact edge 7. The horizontal portions of these L-shaped flexible portions 8 portions flex slightly when the block element 4 is connected to the tubular element 2, thus exerting a thrust on the conduit 3A, 3B through the vertical portion of the flexible portion 8 shaped like an "L".

In the embodiments of Fig. 1-4, the tubular element 2 comprises a first and a second insert portion 12A, 12B, configured to fit respectively into the second air conduit 3B and into the first air conduit 3A. The first insert portion 12A of the tubular element 2 configured to fit into the second air conduit 3B comprises one or more first gaskets 10. Said first gasket 10 is arranged between the external surface of the first insert portion 12A and the internal surface of the second air conduit 3B. As previously clarified, these two surfaces adhere completely and uniformly to the first gasket 10, considerably improving the tightness of the pipeline 100 which, in this way, can guarantee sealing standards of type C or D as specified in the UNI EN 12237: 2004 or UNI EN 1507: 2008 regulations. In a completely analogous manner, also the second insert portion 12B of the tubular element 2 comprises a second gasket 11 arranged between said second insert portion 12B and the first air conduit 3A, to provide the aforementioned seal having a seal class of type C or D.

The external shape of the first and second insert portions 12A, 12B of the tubular element is slightly smaller than the internal shape of the air conduits 3A, 3B, so as to minimize the distance between the surfaces and allow a better sealing of the first and second gasket 10,11. It is therefore clear that the external shape of the first insert portion 12A is complementary to the internal shape of said second air conduit 3A and that the external shape of the second insert portion 12B is complementary to the internal shape of said first air conduit 3A.

The first and second air conduits 3A, 3B have a polygonal section as shown in Fig. 3 or circular as shown in Fig. 1. Likewise, the tubular element 2 also has first and second insert portions 12A, 12B with polygonal or circular shape, depending on the shape of the air conduits 3A, 3B. Alternatively, the air conduits 3A, 3B and the insert portions 12A, 12B can have an oval shape (not shown).

In a further embodiment, illustrated in Figs. 5 and 6, the anchoring portion 5 is made directly on the first air conduit 3A. In particular, an end portion 30A of the first air conduit 3A is shaped so as to at least partially realize said anchoring portion 5. If the first air conduit 3A is made of metal sheet, the end portion 30A can be suitably shaped in so as to create an abutment profile for the block element 4. As illustrated in Fig. 6, also the end portion 30B of the second air conduit 3B can be shaped in such a way as to create an abutment profile for the block element 4. The assembly consisting of the abutment profiles of the end portion 30A and of the end portion 30B form the anchoring portion 5. The metal sheet sides of the air conduits 3A, 3B are bent so as to obtain a tooth-shaped form, as shown in Fig. 6. This profile makes it possible to lock the block element 4 with respect to the air conduit 3A, 3B in a firm but reversible manner. Other profiles not shown can be used to obtain the same effect of retaining the block element 4 on the air conduit 3A, 3B.

The block element 4 of the embodiment of Fig. 6 is obtained by bending a metal sheet so as to obtain a complementary shape, at least in part, with the aforementioned abutment profiles of the end portions 30A, 30B of the first and second air conduit 3A, 3B. This complementary shape constitutes the coupling portion 6 of the block element 4. In this embodiment of the block element 4, the flexible portion 8 is constituted by the horizontal branch of its section profile illustrated in Fig. 6. This branch allows the widening/narrowing of the block element 4 and provides a thrust, having a direction parallel to the sides of the conduits 3A, 3B, that holds and close together the first and second air conduits 3A, 3B. The gasket 10, being in this embodiment arranged between the end portions 30A, 30B, allows to achieve an optimal seal.

As shown in Fig. 5, the block elements 4 are connected by means of angular elements 15 which complete the profile of the connecting element, improving its aesthetic appearance and sealing.

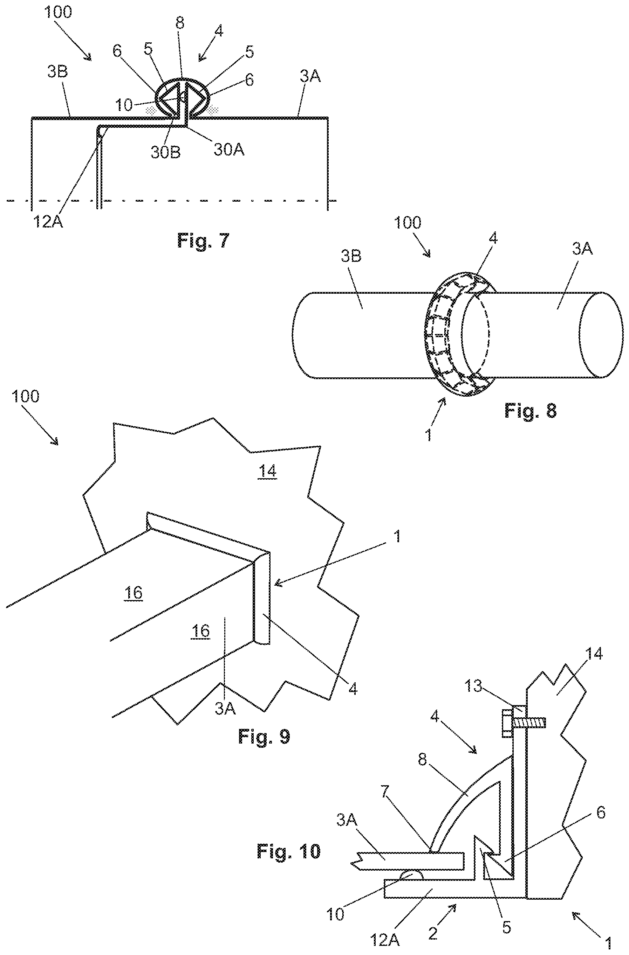

Alternatively, as illustrated in Fig. 7 and 8, the sections of the end portions 30A, 30B of the first and second air conduits 3A, 3B have a triangular shape and , overall, a rhombus shape, while the block element 4 is made of polymeric material and has a C-shaped section. In this case, the angular elements 15 are not required because the "C" profile can be made of a semi-rigid material so as to accommodate the edges of the air conduits 3A, 3B in a loop around the end portions 30A, 30B as illustrated in Fig 8. The "C" profile can be partially elastic (flexible portion 8) so as to exert a thrust suitable to approach the end portions 30A, 30B together.

In the embodiments of Figs. 5,6,7,8, the end portion 30A of the first air conduit 3A is shaped to also realize said first insert portion 12A of the first air conduit 3A inside the second air conduit 3B. This first insert portion 12A allows better coaxiality of the conduits 3A, 3B with each other. Said first insert portion 12A also allows supporting the first gasket 10 as illustrated in Fig. 6. Alternatively, said first gasket 10 can be arranged between the end portions 30A, 30B of the air conduits 3A, 3B, as illustrated in Fig. 7.

The air conduits 3A, 3B of the embodiments of Figs. 5,6,7,8, can have a polygonal or alternatively a circular section. In order to be circular, the end portions 30A, 30B have a plurality of longitudinal cuts, as shown in Fig. 8, such as to allow the metal sheet of the conduit 3A, 3B to be bent into a cylindrical shape.

In a further embodiment illustrated in Figs. 9 and 10, a junction system 1 is shown for sealing an air conduit 3A to a wall from which air enters or exits. In this embodiment, the tubular element 2 comprises a first insert portion 12A that can be inserted inside the conduit 3A, an anchoring portion 5 and a flange 13 orthogonal to said insertion portion 12A. The flange 13 allows the coupling of the same to the wall 14, and therefore of the conduit 3A. Once the flange 13 has been connected to the wall, the conduit 3A can be inserted in the first insert portion 12A and hooked to the tubular element by means of the block element 4. The block element 4 comprises a flexible portion 8 which exerts a pressure on the external side of the air conduit 3A, and a coupling portion 6 configured to cooperate with said anchoring portion 5 of the tubular element 2. The tubular element 2 also comprises a first gasket 10 arranged on the insert portion 12A which, thanks to the thrust of the flexible portion 8 of the block element 4, adheres completely to the internal wall of the air conduit 3A. In this way, a sealed connection between an air conduit 3A and a wall, behind which an air intake or delivery machine can be arranged, is created. In an alternative not shown, with a similar configuration, it is also possible to create a closing cap for the pipeline 100.

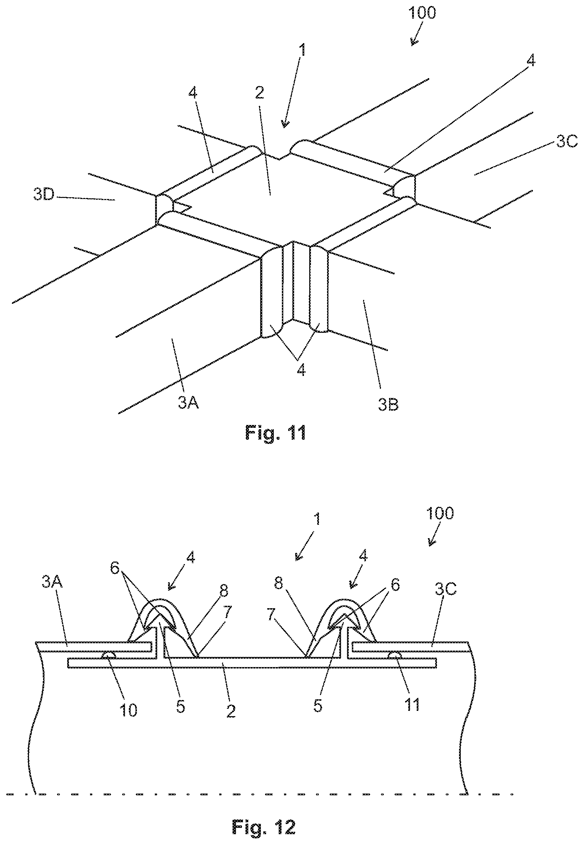

In a further embodiment, the tubular element 2 can be shaped to allow the connection of more than two air conduits. In particular, Fig. 11 shows a tubular element 2 configured to allow the connection of four air conduits 3A-3D. The connecting ends of the tubular element 2, as well as the block element 4, represented in Fig. 12, are similar to those of the embodiment illustrated in Fig. 2A, 2B or 4. In this embodiment each block element 4 is configured to block an air conduit 3A-3D to the tubular element 2 and the tubular element 2 has several anchoring portions 5 to allow the connection of the various air conduits 3A-3D. The number of block elements 4 is greater than on the solution that allows the axial connection of two air conduits (Fig. 1-4), for the rest the operation and the architecture of the solution is similar, therefore the technical measures mentioned above also apply to this solution.

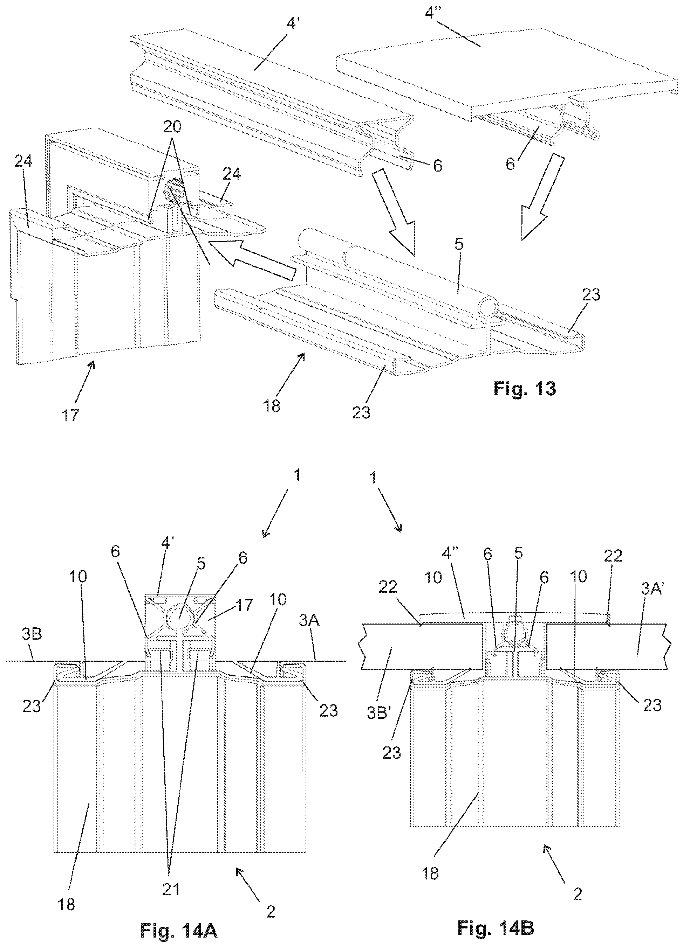

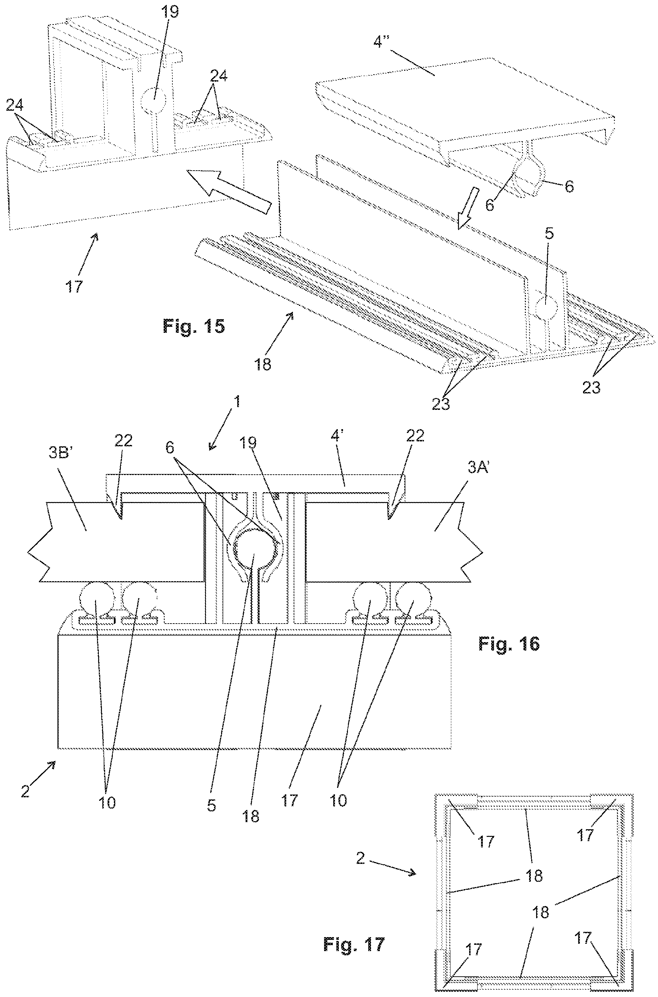

With reference to Fig. 13, the components that allow to realize a tubular element 2 of the assemblable type are shown. In particular, Fig. 13 represents an corner component 17 shaped in such a way as to realize a shape coupling with one or two straight components 18. By fitting the straight components 18 into the corner components 17, it is possible to realize a tubular element 2 as shown in Fig. 17. In particular, a part of the anchoring portion 5 of the straight component 18 can be inserted into a slot 19 of the corner component 17 suitably shaped to achieve said shape coupling.

According to this embodiment, the straight components 18 can be made as sticks of various sizes, which during the installation of the pipeline 100, can be cut to the desired length, depending on the size of the sidewalls of the air conduit 3A, 3B. This solution makes it possible to produce tubular elements 2 of various shapes and sizes at low cost, quickly and directly in the place of installation of the pipeline 100.

In particular, the straight components 18 of the tubular element 2 of Fig. 13 allow the use of block elements 4 of different types. In particular, as shown in Fig. 14A, a first type of block element 4' allows to block air conduits 3A, 3B made of a metal sheet, thus with an extremely thin thickness. Conversely, as shown in Fig. 14B, a second type of block element 4" allows to block air conduits 3A, 3B made with glass or rock wool panels 3A', 3B'. However, both types of block elements 4', 4"can be interlocked to the same anchoring portion 5 of the straight component 18.

Fig. 15 shows a further version of the corner and straight components 17,18 of a tubular element 2 of the assemblable type. As described for the versions of Fig. 13 and 14, the block element 4" is shaped to fit into an anchoring portion 5 of a corresponding straight component 18 in order to lock the panels 3A', 3B' on the element tubular 2 consisting of corner components 17 and straight components 18, as schematically illustrated in Fig. 17. The rectilinear component 18 can be inserted by interlocking into corresponding slots 19 of the corner components 17, in order to realize said tubular element 2.

Both in the version of Fig. 13-14 and in that of Fig. 15-16, the straight component 18 comprises suitable tracks 23 shaped to receive suitably shaped gaskets 10. The corner components 17 also comprise corresponding tracks 24 for receiving further gaskets.

The version of tubular element 2 of Fig. 15-16 comprises further head gaskets which improve the tightness of the junction system 1.

The version of the tubular element 2 of Fig. 13-14 comprises a corner component 17 having a plurality of harpoons 20 shaped to block the extraction of suitably shaped air conduits 3A, 3B. In particular, the air conduits 3A, 3B have ends of the sheet bent to form a stop between the conduits 3A, 3B and said harpoons 20.

The version of the junction system 1 of Fig. 15-16 includes a block element 4" having a plurality of harpoons 22 configured to prevent the extraction of the panels 3A', 3B'. In particular, said harpoons 22 are ends of the block element 4" shaped like a wedge and designed to perforate the panels 3A', 3B', as illustrated in Fig. 16.

A final object of the present invention is an air pipeline 100 which includes a plurality of air conduits 3A-3D as described above which are connected together through tubular elements 2 such as those shown in Fig. 2A, 2B, 4, 10 or 12. Alternatively or in addition, the conduits can be connected to each other by means of air conduits shaped so as to allow said interlocking coupling with the block element 4, as described for the embodiments of Fig. 6 and 7. This type of pipeline has the particular advantage of guaranteeing a high seal capable of satisfying the stringent requirements of seal class C or D of the UNI EN 12237: 2004 or UNI EN 1507: 2008 standards.

Optionally, said air pipeline 100 can comprise one or more block elements 4 colored on the external side to facilitate their functional distinction. For example, the UNI 8857: 1987 standard identifies the following colors to distinguish the function of a specific section of pipeline in a project of a civil aeration system. The present pipeline 100 can therefore comprise block elements 4 colored externally according to one of the following options:
- red for the supply air pipelines;
- blue for the intake air pipelines;
- green for the air pipelines for the intake of air from outside;
- gray for the air pipelines for expelling air outside.
- yellow for air pipelines of stale air from air-conditioned environments;
- orange for air pipelines intended to recirculate part of the stale air extracted from an air-conditioned environment.

This color corresponds to that suggested by the aforementioned legislation and therefore allows to distinguish at first sight the function of a specific pipeline without the need to analyze the design of the ventilation system.

An object of the present invention is:
a junction system 1 for air conduits 3A-3D comprising:
   - an anchoring portion 5 of a first air conduit 3A or a tubular element 2 which can be inserted in at least a second air conduit 3B;
   - a first insert portion 12A of the first air conduit 3A or of the tubular element 2 configured to fit into said at least one second air conduit 3B;
   - at least one block element 4 connectable to said anchoring portion 5;
wherein said block element 4 comprises at least a flexible portion 8 configured to exert a thrust on an external surface of the air conduit 3A, 3B when said block element 4 is connected to said anchoring portion 5.

## Claims

1. Junction system (1) for air conduits (3A-3D) comprising:
- a first air conduit (3A) and a second air conduit (3B), said first air conduit (3A) comprising an anchoring portion (5) and a first insert portion (12A) configured to be insertable in said second air conduit (3B);
- at least a block element (4) connectible to said anchoring portion (5);
**characterized in that** said block element (4) comprises at least a flexible portion (8) configured to apply a thrust on an outer surface of the first and second air conduit (3A,3B) when said block element (4) is connected to said anchoring portion (5).

2. Junction system (1) according to claim 1, wherein said block element (4) comprises a coupling portion (6) configured to interlock with said anchoring portion (5) and wherein said anchoring portion (5) is an end portion (30A) of first air conduit (3A) shaped so to realize an interlocking coupling with said coupling portion (6) of said block element (4), preferably said interlocking coupling being of reversible type.

3. Junction system (1) according to claim 2, wherein said second air conduit (3B) comprises an end portion (30B) shaped so to realize a further part of said interlocking coupling.

4. Junction system (1) according to any one of preceding claims, wherein said flexible portion (8) comprises a contact edge (7) of the block element (4) with said air conduit (3A,3B), preferably said block element (4) is made at least in part of a polymeric material, more preferably is made of an elastomeric material.

5. Junction system (1) according to any one of preceding claims, comprising at least a first gasket (10) arranged on an external side of said first insert portion (12A).

6. Junction system (1) according to any one of preceding claims, wherein the external shape of said first insert portion (12A) is substantially complementary with the inner shape of said second air conduit (3B).

7. Junction system (1) for air conduits (3A-3D) comprising:
- a tubular element (2) comprising an anchoring portion (5) and at least one insert portion (12A) configured to be insertable in at least one air conduit (3A,3B);
- at least a block element (4) connectible to said anchoring portion (5);
**characterized in that**
said block element (4) comprises at least a flexible portion (8) configured to apply a thrust on an outer surface of the at least one air conduit (3A,3B) when said block element (4) is connected to said anchoring portion (5).

8. Junction system (1) according to claim 7, wherein said block element (4) comprises a coupling portion (6) configured to interlock with said anchoring portion (5) and wherein said anchoring portion (5) is a portion of said tubular element (2) shaped so to realize an interlocking coupling with said coupling portion (6) of said block element (4), preferably said interlocking coupling being of reversible type.

9. Junction system (1) according to claim 7 or 8, wherein said flexible portion (8) comprises a contact edge (7) of the block element (4) with said air conduit (3A,3B), preferably said block element (4) is made at least in part of a polymeric material, more preferably is made of an elastomeric material.

10. Junction system (1) according to any one of claims 7 to 9, comprising at least a first gasket (10,11) arranged on an external side of said at least one insert portion (12A,12B).

11. Junction system (1) according to any one of claims 7 to 10, wherein the external shape of said at least one insert portion (12A,12B) is substantially complementary with the inner shape of said air conduit (3A,3B).

12. Junction system (1) according to any one of claims 7 to 11, wherein said tubular element (2) comprises corner components (17) and straight components (18) configured to interlock each other to form said tubular element (2), wherein said straight components (18) comprise respective anchoring portions (5).

13. Junction system (1) according to claim 12, wherein said corner component (17), said straight component or said block element (4) comprises at least one harpoon (20,22) configured to prevent the extraction of the at least one air conduit (3A,3B) from the junction system (1).

14. Air pipeline (100) comprising a plurality of air conduits (3A,3B) connected each other through one or more junction systems (1) according to any one of claims 1 to 6 or 7 to 13.

15. Air pipeline (100) according to claim 14, wherein the block element (4) is externally colored according to the intended use of the air pipeline e (100) itself.

## Patentansprüche

1. Verbindungssystem (1) für Luftleitungen (3A-3D) umfassend:
- eine erste Luftleitung (3A) und eine zweite Luftleitung (3B), wobei die erste Luftleitung (3A) einen Verankerungsabschnitt (5) und einen ersten Einsatzabschnitt (12A) umfasst, der so konfiguriert ist, dass er in die zweite Luftleitung (3B) eingesetzt werden kann;
- mindestens ein Blockelement (4), das mit dem Verankerungsabschnitt (5 ) verbindbar ist;
**dadurch gekennzeichnet, dass** das Blockelement (4) mindestens einen flexiblen Abschnitt (8) umfasst, der so konfiguriert ist, dass er einen Schub auf eine Außenfläche der ersten und zweiten Luftleitung (3A, 3B) ausübt, wenn das Blockelement (4) mit dem Verankerungsabschnitt (5) verbunden ist.

2. Verbindungssystem (1) nach Anspruch 1, wobei das Blockelement (4) einen Kupplungsabschnitt (6) umfasst, der so konfiguriert ist, dass er mit dem Verankerungsabschnitt (5) ineinandergreift, und wobei der Verankerungsabschnitt (5) ein Endabschnitt (30A) der ersten Luftleitung (3A) ist, der so geformt ist, dass er eine formschlüssige Kupplung mit dem Kupplungsabschnitt (6) des Blockelements (4) ausbildet, wobei die formschlüssige Kupplung vorzugsweise vom reversiblen Typ ist.

3. Verbindungssystem (1) nach Anspruch 2, wobei die zweite Luftleitung (3B) einen Endabschnitt (30B) umfasst, der so geformt ist, dass er einen weiteren Teil der Verriegelungskupplung bildet.

4. Verbindungssystem (1) nach einem der vorhergehenden Ansprüche, wobei der flexible Abschnitt (8) eine Kontaktkante (7) des Blockelements (4) mit der Luftleitung (3A, 3B) umfasst, wobei das Blockelement (4) vorzugsweise zumindest teilweise aus einem Polymermaterial, noch besser aus einem Elastomermaterial besteht.

5. Verbindungssystem (1) nach einem der vorhergehenden Ansprüche, das mindestens eine erste Dichtung (10) umfasst, die an einer Außenseite des ersten Einsatzabschnitts (12A) angeordnet ist.

6. Verbindungssystem (1) nach einem der vorhergehenden Ansprüche, wobei die Außenform des ersten Einsatzabschnitts (12A) im Wesentlichen komplementär zur Innenform der zweiten Luftleitung (3B) ist.

7. Verbindungssystem (1) für Luftleitungen (3A-3D) umfassend:
- ein röhrenförmiges Element (2), das einen Verankerungsabschnitt (5) und mindestens einen Einsatzabschnitt (12A) umfasst, der so konfiguriert ist, dass er in mindestens eine Luftleitung (3A, 3B) eingesetzt werden kann;
- mindestens ein Blockelement (4), das mit dem Verankerungsabschnitt (5) verbindbar ist;
**dadurch gekennzeichnet, dass** das Blockelement (4) mindestens einen flexiblen Abschnitt (8) umfasst, der so konfiguriert ist, dass er einen Schub auf eine Außenfläche der mindestens einen Luftleitung (3A, 3B) ausübt, wenn das Blockelement (4) mit dem Verankerungsabschnitt (5) verbunden ist.

8. Verbindungssystem (1) nach Anspruch 7, wobei das Blockelement (4) einen Kupplungsabschnitt (6) umfasst, der so konfiguriert ist, dass er mit dem Verankerungsabschnitt (5) ineinandergreift, und wobei der Verankerungsabschnitt (5) ein Abschnitt des rohrförmigen Elements (2) ist, der so geformt ist, dass er eine formschlüssige Kupplung mit dem Kupplungsabschnitt (6) des Blockelements (4) herstellt, wobei die formschlüssige Kupplung vorzugsweise vom reversiblen Typ ist.

9. Verbindungssystem (1) nach Anspruch 7 oder 8, wobei der flexible Abschnitt (8) eine Kontaktkante (7) des Blockelements (4) mit der Luftleitung (3A, 3B) umfasst, wobei das Blockelement (4) vorzugsweise zumindest teilweise aus einem Polymermaterial, noch besser aus einem Elastomermaterial besteht.

10. Verbindungssystem (1) nach einem der Ansprüche 7 bis 9, das mindestens eine erste Dichtung (10, 11) umfasst, die an einer Außenseite des mindestens einen Einsatzabschnitts (12A, 12B) angeordnet ist.

11. Verbindungssystem (1) nach einem der Ansprüche 7 bis 10, wobei die Außenform des mindestens einen Einsatzabschnitts (12A, 12B) im Wesentlichen komplementär zur Innenform der Luftleitung (3A, 3B) ist.

12. Verbindungssystem (1) nach einem der Ansprüche 7 bis 11, wobei das rohrförmige Element (2) Eckkomponenten (17) und gerade Komponenten (18) umfasst, die so konfiguriert sind, dass sie ineinandergreifen, um das rohrförmige Element (2) zu bilden, wobei die geraden Komponenten (18) jeweilige Verankerungsabschnitte (5) umfassen.

13. Verbindungssystem (1) nach Anspruch 12, wobei das Eckelement (17), das gerade Element oder das Blockelement (4) mindestens eine Harpune (20, 22) umfasst, die dazu konfiguriert ist, das Herausziehen der mindestens einen Luftleitung (3A, 3B) aus dem Verbindungssystem (1) zu verhindern.

14. Luftleitung (100), die eine Vielzahl von Luftleitungen (3A, 3B) umfasst, die durch ein oder mehrere Verbindungssysteme (1) gemäß einem der Ansprüche 1 bis 6 oder 7 bis 13 miteinander verbunden sind.

15. Luftleitung (100) nach Anspruch 14, wobei das Blockelement (4) entsprechend dem Verwendungszweck der Luftleitung (100) außen eingefärbt ist.

## Revendications

1. Système de jonction (1) pour conduits d'air (3A-3D) comprenant :
- un premier conduit d'air (3A) et un deuxième conduit d'air (3B), ledit premier conduit d'air (3A) comprenant une partie d'ancrage (5) et une première partie d'insertion (12A) configurée pour être insérable dans ledit deuxième conduit d'air (3B) ;
- au moins un élément de bloc (4) connectable à ladite partie d'ancrage (5) ;
**caractérisé en ce que** ledit élément de bloc (4) comprend au moins une partie flexible (8) configurée pour appliquer une poussée sur une surface extérieure du premier et du deuxième conduit d'air (3A, 3B) lorsque ledit élément de bloc (4) est connecté à ladite partie d'ancrage (5).

2. Système de jonction (1) selon la revendication 1, dans lequel ledit élément de bloc (4) comprend une partie de couplage (6) configurée pour s'emboîter avec ladite partie d'ancrage (5) et dans lequel ladite partie d'ancrage (5) est une partie d'extrémité (30A) du premier conduit d'air (3A) formée de manière à réaliser un couplage par emboîtement avec ladite partie de couplage (6) dudit élément de bloc (4), ledit couplage par emboîtement étant de préférence de type réversible.

3. Système de jonction (1) selon la revendication 2, dans lequel ledit deuxième conduit d'air (3B) comprend une partie d'extrémité (30B) façonnée de manière à réaliser une autre partie dudit couplage de verrouillage.

4. Système de jonction (1) selon l'une quelconque des revendications précédentes, dans lequel ladite partie flexible (8) comprend un bord de contact (7) de l'élément de bloc (4) avec ledit conduit d'air (3A, 3B), de préférence ledit élément de bloc (4) est réalisé au moins en partie en un matériau polymère, plus préférablement en un matériau élastomère.

5. Système de jonction (1) selon l'une quelconque des revendications précédentes, comprenant au moins un premier joint (10) disposé sur un côté externe de ladite première partie d'insertion (12A).

6. Système de jonction (1) selon l'une quelconque des revendications précédentes, dans lequel la forme externe de ladite première partie d'insertion (12A) est essentiellement complémentaire de la forme interne dudit deuxième conduit d'air (3B).

7. Système de jonction (1) pour conduits d'air (3A-3D) comprenant :
- un élément tubulaire (2) comprenant une partie d'ancrage (5) et au moins une partie d'insertion (12A) configurée pour être insérable dans au moins un conduit d'air (3A, 3B) ;
- au moins un élément de bloc (4) connectable à ladite partie d'ancrage (5) ;
**caractérisé en ce que** ledit élément de bloc (4) comprend au moins une partie flexible (8) configurée pour appliquer une poussée sur une surface extérieure du ou des conduits d'air (3A, 3B) lorsque ledit élément de bloc (4) est connecté à ladite partie d'ancrage (5).

8. Système de jonction (1) selon la revendication 7, dans lequel ledit élément de bloc (4) comprend une partie de couplage (6) configurée pour s'emboîter avec ladite partie d'ancrage (5) et dans lequel ladite partie d'ancrage (5) est une partie dudit élément tubulaire (2) façonnée de manière à réaliser un couplage par emboîtement avec ladite partie de couplage (6) dudit élément de bloc (4), ledit couplage par emboîtement étant de préférence de type réversible.

9. Système de jonction (1) selon la revendication 7 ou 8, dans lequel ladite partie flexible (8) comprend un bord de contact (7) de l'élément de bloc (4) avec ledit conduit d'air (3A, 3B), de préférence ledit élément de bloc (4) est réalisé au moins en partie en un matériau polymère, plus préférablement en un matériau élastomère.

10. Système de jonction (1) selon l'une quelconque des revendications 7 à 9, comprenant au moins un premier joint (10, 11) disposé sur un côté externe de ladite au moins une partie d'insert (12A, 12B).

11. Système de jonction (1) selon l'une quelconque des revendications 7 à 10, dans lequel la forme externe de ladite au moins une partie d'insertion (12A, 12B) est essentiellement complémentaire de la forme interne dudit conduit d'air (3A, 3B).

12. Système de jonction (1) selon l'une quelconque des revendications 7 à 11, dans lequel ledit élément tubulaire (2) comprend des composants d'angle (17) et des composants droits (18) configurés pour s'emboîter les uns dans les autres pour former ledit élément tubulaire (2), dans lequel lesdits composants droits (18) comprennent des parties d'ancrage respectives (5).

13. Système de jonction (1) selon la revendication 12, dans lequel ledit composant d'angle (17), ledit composant droit ou ledit élément de bloc (4) comprend au moins un harpon (20, 22) configuré pour empêcher l'extraction du ou des conduits d'air (3A, 3B) du système de jonction (1).

14. Conduite d'air (100) comprenant une pluralité de conduits d'air (3A, 3B) reliés entre eux par un ou plusieurs systèmes de jonction (1) selon l'une quelconque des revendications 1 à 6 ou 7 à 13.

15. Conduite d'air (100) selon la revendication 14, dans laquelle l'élément de bloc (4) est coloré extérieurement en fonction de l'utilisation prévue de la conduite d'air (100) et elle-même.
